(19) **Europäisches Patentamt / European Patent Office / Office européen des brevets**

(11) **EP 2 661 825 B1**

(12) **EUROPEAN PATENT SPECIFICATION**

(45) Date of publication and mention
of the grant of the patent:
**06.05.2020 Bulletin 2020/19**

(21) Application number: **12731976.2**

(22) Date of filing: **09.01.2012**

(51) Int Cl.:
*H04W 72/02* <sup>(2009.01)</sup>   *H04W 24/10* <sup>(2009.01)</sup>
*H04W 48/16* <sup>(2009.01)</sup>   *H04W 4/70* <sup>(2018.01)</sup>

(86) International application number:
**PCT/KR2012/000193**

(87) International publication number:
**WO 2012/093914 (12.07.2012 Gazette 2012/28)**

(54) **METHODS AND APPARATUSES TO SUPPORT EFFICIENT AND RELIABLE MACHINE TO MACHINE COMMUNICATIONS**

VERFAHREN UND VORRICHTUNGEN ZUR UNTERSTÜTZUNG EINER EFFIZIENTEN UND ZUVERLÄSSIGEN MASCHINEN-MASCHINEN-KOMMUNIKATION

PROCÉDÉS ET APPAREILS POUR LA PRISE EN CHARGE DE COMMUNICATIONS EFFICIENTES ET FIABLES ENTRE MACHINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2011 US 201161430915 P**
**05.01.2012 US 201213344482**

(43) Date of publication of application:
**13.11.2013 Bulletin 2013/46**

(73) Proprietor: **Samsung Electronics Co., Ltd.**
**Gyeonggi-do 443-742 (KR)**

(72) Inventors:
• **LI, Ying**
**Richardson, TX 75082 (US)**

• **JOSIAM, Kaushik**
**Richardson, TX 75082 (US)**
• **RAMAKRISHNA, Sudhir**
**Richardson, TX 75082 (US)**

(74) Representative: **Nederlandsch Octrooibureau**
**P.O. Box 29720**
**2502 LS The Hague (NL)**

(56) References cited:
**EP-A1- 1 623 518     KR-A- 20060 009 289**
**KR-A- 20080 063 023     KR-A- 20090 072 052**
**US-A1- 2009 274 041     US-A1- 2010 157 820**

## Description

## Technical Field

The present application relates generally to wireless communications and, more specifically, to methods and apparatuses to support efficient and reliable machine to machine communications.

## Background Art

Machine-to-machine (M2M) communication refers to communication involving one or more entities that do not necessarily need human interaction. The M2M communication can include collection of data by M2M devices, transmission of collected and selected data through a communication network (e.g., via a cellular network), assessment of the data received by a network entity such as server in the network, and automation of the flow of data to systems or people who need to know them. M2M communication can also include the system or the network communicating with the M2M devices, to give the devices system updates, instructions, configurations, paging information, etc. Exemplary use cases of M2M communications include metering, road security, cargo tracking, remote sensing and monitoring, and consumer electronic and devices.

EP 1 623 518 A1 describes a method for performing a ranging operation according to the priority order in a mobile communication system using a BWA (Broadcast Wireless Access) scheme. The method comprises steps of: receiving backoff domains having the start and end values of the backoff corresponding to each ranging operation, the backoff domains being determined from a base station according to the priority order of the ranging operations between the base station and subscriber terminals; performing a ranging operation and, if it is determined that the step of performing the ranging operation fails, selecting backoff domains among the received backoff domains according to the priority order of the performed ranging operations; and, re-performing the ranging operation according to the selected backoff domains.

## Disclosure of Invention

## Technical Problem

One example of M2M communication is a smart electrical meter communicating with a server at the electric power utility company. However, the current IEEE 802.16m specification has limited support for M2M communication.

## Solution to Problem

The invention is set out in the appended set of claims. For use in a machine device, a method to support machine-to-machine communications over a network is provided. The method includes acquiring system information from the network. The method also includes determining a ranging channel during a ranging back-off window. The method further includes performing ranging based on the determined ranging channel. The method still further includes communicating over the d network. The ranging channel is determined according to a ranging priority of the machine device.

A machine device configured to support machine-to-machine communications is provided. The machine device includes a processor configured to acquire system information from the network. The processor is also configured to determine a ranging channel during a ranging back-off window. The processor is also configured to perform ranging based on the determined ranging channel. The processor is further configured to communicate over the network. The ranging channel is determined according to a ranging priority of the machine device.

For use in a base station, a method to support machine-to-machine communications is provided. The method includes providing system information from the network to a machine device. The method also includes determining a ranging channel during a ranging back-off window. The method further includes receiving a signal from the machine device on the determined ranging channel. The method still further includes communicating with the machine device over the network. The ranging channel is determined according to a ranging priority of the machine device.

A base station configured to support machine-to-machine communications is provided. The base station includes a processor configured to provide system information from the network to a machine device. The processor is also configured to determine a ranging channel during a ranging back-off window. The processor is further configured to receive a signal from the machine device on the determined ranging channel. The processor is still further configured to communicate with the machine device over the network. The ranging channel is determined according to a ranging priority of the machine device.

## Brief Description of Drawings

FIGURE 1 illustrates a timeline of a machine device starting a network entry procedure according to an embodiment of this disclosure
FIGURE 2 illustrates an example of scheduling network entry using different initial back-off window sizes for different devices with different urgency requirements, according to an embodiment
FIGURE 3 illustrates an example of scheduling network entry using different waiting times for different devices with different urgency requirements, according to an embodiment

FIGURE 4 illustrates an example of scheduling network entry using different wait times for different devices, according to an embodiment; and

FIGURE 5 illustrates an example of scheduling network entry where each device waits a certain time before starting the network entry procedure, according to an embodiment.

**Mode for the Invention**

It may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

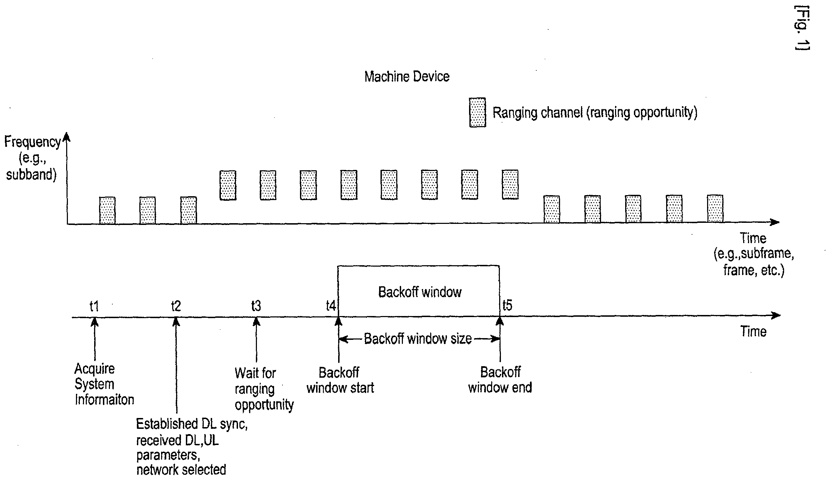

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device configured for communication.

The following document is hereby incorporated into the present disclosure as if fully set forth herein:

REF1 IEEE P802.16m/D8, "Part 16 Air Interface for Broadband Wireless Access Systems, Advanced Air Interface", August 2010.

In accordance with this disclosure, an apparatus and methods support efficient and reliable machine to machine (M2M) communications is provided. Throughout the disclosure, various terms are used which may be associated with an IEEE 802.16m system. However, the ideas and solutions in this disclosure are not limited to a IEEE 802.16m system. It will be understood that the ideas and solutions disclosed herein may be used in other communication systems and networks, with the various terms identified in various ways according to the associated system or network.

As used herein, deregistration with context retention (DCR) mode is a mode in which an advanced mobile station (AMS) is deregistered from the net while its context is maintained in a network entity until a context retention timer expires.

The context retention timer (CR timer) is a global value defined in the system, such as described in the REF1 document. However, given the possible different requirements of the AMS on the frequency of entering or exiting the DCR mode, it may be beneficial to make the CR timer flexible, according to different deployment scenarios. While the CR timer is valid (i.e., unexpired), the network retains the AMS's derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device configured for communication.

In accordance with this disclosure, an apparatus and methods support efficient and reliable machine to machine (M2M) communications is provided. Throughout the disclosure, various terms are used which may be associated with an IEEE 802.16m system. However, the ideas and solutions in this disclosure are not limited to a IEEE 802.16m system. It will be understood that the ideas and solutions disclosed herein may be used in other communication systems and networks, with the various terms identified in various ways according to the associated system or network.

As used herein, deregistration with context retention (DCR) mode is a mode in which an advanced mobile station (AMS) is deregistered from the net while its context is maintained in a network entity until a context retention timer expires.

The context retention timer (CR timer) is a global value defined in the system, such as described in the REF1 document. However, given the possible different requirements of the AMS on the frequency of entering or exiting the DCR mode, it may be beneficial to make the CR timer flexible, according to different deployment scenarios. While the CR timer is valid (i.e., unexpired), the network retains the AMS's ranging ACK may include an adjustment of the power, timing, etc., of the machine device), or by allocating a resource to the machine device so that the machine device may further send a ranging request message, etc.

The back-off window that the machine device uses can be defined by a back-off window start point and a back-off window end point. Alternatively, the back-off window can be defined by a back-off window start point and a back-off window size. In another alternative, the back-off window can be defined according to an initial back-off window size, a maximum window size, and a rule for changing the window size (e.g., in one rule, upon every collision, the window size is doubled until the maximum window size is reached).

FIGURE 1 illustrates a timeline of a machine device starting a network entry procedure according to the embodiment described above. In the embodiment shown in FIGURE 1, the machine device is attempting to communicate with the network via a base station. As shown in FIGURE 1, at time point t1, the machine device acquires system information from the base station via the synchronization channel and broadcast channel of the base station. At time point t2, the machine device establishes synchronization, obtains the downlink and uplink parameters, and selects the network. Then the machine device waits for a ranging opportunity at time t3. At time t4, a back-off window is started. Although not shown in FIGURE 1, the back-off window may be alternatively started at time point t2 or t3, according to different embodiments, such as if no extra waiting time is needed to start such a window.

In certain embodiments, machine devices may have different priorities in ranging. For example, some devices that do not communicate with the network frequently may have a lower priority in ranging. An example of such a device is an electric utility meter that typically only reports to the grid once a day or once a month. Such meters may have a lower priority in ranging. In contrast, a standard mobile station (i.e., mobile phone) may have a higher priority in ranging compared with an electric utility meter, due to the mobile station's frequent communication with the network (e.g., dozens of times each day for calls, texts, data service, and the like).

Machine devices such as utility meters often include a backup battery for use during events such as a power outage. A utility meter without little or no buffered battery power may have a higher priority in ranging in some situations, such as at an occurrence of a power outage, and the meter has to report the power outage. A meter with little remaining backup battery life may have a higher priority in ranging, due to a higher urgency in reporting before the battery is depleted. In contrast, a meter with good battery life may have a lower priority in ranging, due to the meter having a lower urgency in reporting.

Support for different priorities in ranging may be achieved using different approaches. The different approaches include use of different sets of the back-off timing, back-off windows (e.g., different start time of the back-off window, different back-off window size, etc.), and so forth scheduling the devices to wait for a period of time before the devices start the back-off window, where the period of time is of different lengths; and using different starting times for sending a bandwidth request for a resource to carry a ranging request message, etc. These different approaches are discussed in greater detail below.

Throughout this disclosure, a network controlled procedure may be used as an example of how the parameters related to a ranging process such as back-off timing, back-off window start, back-off window size, etc., are determined. In other words, the network may configure these parameters and give the instructions to the machine type devices. However, the disclosure is applicable to other situations, such as where a machine type device determines the ranging related parameters, such as back-off timing, back-off window start, back-off window size, etc. The machine type device can determine the parameters based on its status, e.g., the battery life time, reserved battery level, urgency level, etc. For example, if the battery level of a machine type device is low, the device may use a smaller back-off window size or a longer waiting time to start the back-off window. Conversely, if the batter level is high, the device may use a larger window size or a shorter waiting time to start the back-off window. The disclosure also includes the combination of the methods in the embodiments. For example, both the network and the machine type device can decide together (e.g., by negotiation, handshaking, etc.) on the configuration of the parameters associated with the ranging process.

Throughout this disclosure, a power outage is used as an example situation where many machine devices may communicate with the network at the same time. For example, at the occurrence of a power outage, every utility meter in the geographical area affected by the power outage may attempt at approximately the same time to inform the utility company of the power outage. However, it will be understood that this disclosure is not limited to the case of a power outage. Instead, the embodiments of this disclosure may be applicable for many use cases. Other example situations include recovery from a power outage, many devices moving to a new area (i.e., a mass location update), many devices receiving a group based paging communication, and so forth. To avoid possible congestion on ranging in network entry, the devices can be scheduled to start the ranging process at different times. The communication with the network can be, for example, sending alarms to the network about a failure such as a power outage, sending a report, sending a location update, sending an ACK/NACK, and so forth.

In one example, the scheduling can be achieved by hashing the identifier of the device (i.e., a mobile station identifier (MSID), CRID, etc.) to the different access time offsets to start the ranging. In another example, different machine devices are associated with different initial back-off windows, such that an urgent machine device is associated with a smaller back-off window, while the non-urgent machine device may use a larger back-off window.

The rules for scheduling the devices for network entry timing can be predefined, or the rules can be configured and updated in certain messages. The network can send the rules to the machine device, and the machine device uses the rule to derive or obtain the related timing for network entry. Alternatively, the network may signal the machine device directly with the related timing for network entry. The scheduling rules or approaches can be different in different scenarios. For example, particular scheduling rules may be set up for particular scenarios, such as a power outage, a recovery of a power outage, a reception of a group based paging, etc. The scheduling rules used in particular scenarios are provided to avoid congestion during network entry due to simultaneous attempts by many machine devices for network access.

In order to enable the scheduling rules, the machine device may indicate its device type (e.g., whether or not the device is a machine type device, what kind of reporting periodicity the device employs, what kind of delay requirement the machine uses, etc.) to the network. For example, the machine device may indicate its device type in a capability negotiation procedure. The indication may be in a message such as a basic capability negotiation request message. The network may provide to the machine device one or more scheduling rules associated with network entry (e.g., rules for how to schedule the ranging, how to schedule the bandwidth request, how to set up the timing related to the random back-off or the timing related to the back-off window, the initial size of the back-off window, the maximum size of the back-off window, and the like). The rules may be unicasted, multicasted, or broadcasted to the machine device. For example, the network can unicast the rules for the machine device to follow, after the machine device provides its device type, capability, etc., to the network, e.g., in the capability negotiation response message.

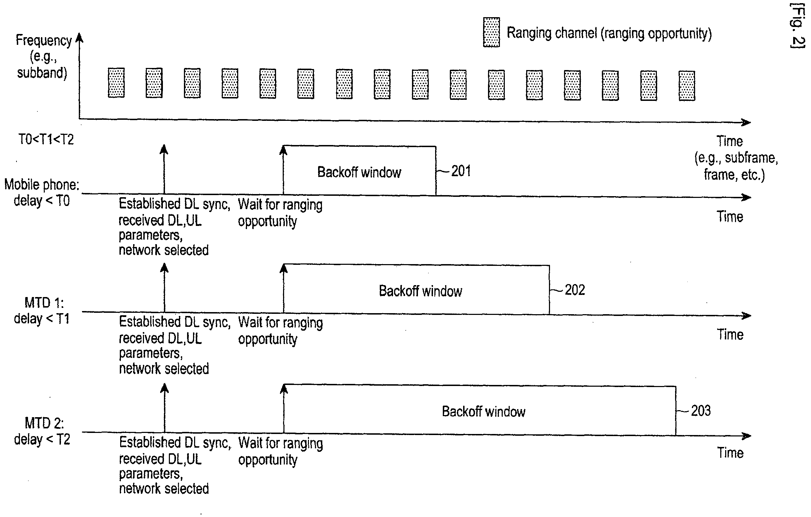

FIGURE 2 illustrates an example of scheduling network entry using different initial back-off window sizes for different devices with different urgency requirements, according to one embodiment of this disclosure. In FIGURE 2, a mobile phone and two machine devices (machine type device 1 (MTD 1) and machine type device 2 (MTD 2)) all attempt network entry. The mobile phone has the most stringent delay requirement for the network access procedure-the delay must be less than a time period T0, where T0 < T1 < T2. Thus, the mobile phone is assigned a smaller back-off window size, as indicated by reference number 201. MTD 1 has a medium delay requirement for network access-the delay must be less than T1. Accordingly, MTD 1 is assigned a medium size for the initial back-off window, as indicated by reference number 202. MTD 2 has the least rigorous delay requirement for network access-the delay must be less than T2. Thus, MTD 2 is assigned a larger size for the initial back-off window, as indicated by reference number 203.

The urgency requirement can be related to the battery reserve level. For example, MTD 1 can be a device which may have a lower battery reserve level, and MTD2 can be a device which may have a higher battery reserve level. In a situation such as the power outage where MTD1 and MTD2 lose the power-line power supply, MTD1 and MTD2 use the reserved battery or backup battery to communicate with the network. MTD1 with a lower battery reserve level may use a smaller back-off window size or shorter waiting time to start the back-off window. Conversely, MTD2 with a higher battery reserve level may use a larger back-off window size or longer waiting time to start the back-off window, as long as the remaining battery power is enough for the devices to have a communication with the network.

In another embodiment, MTD1 and MTD2 choose the back-off window size or the waiting time to start the back-off window to be as long as possible, within the constraint that the device would have enough remaining battery power to have the communication with the network. The machine type device can make such a decision on the parameters of the back-off window size, or the start time of the back-off window, based on its battery reserve, etc. The MTD can also have a rule predetermined and programmed by the network, where the rule can be stored in the MTD, and the MTD can determine the parameters based on the rule. The rule can be, for example, related to the reserved battery level. In another embodiment, the network can communicate the configured parameters to the MTD, e.g., by sending messages. It will be understood that these embodiments are not limited to MTDs; these embodiments also can be applicable to mobile devices in general.

In certain embodiments, the machine device may indicate its type to the network. The type may be indicated, e.g., in a capability negotiation request message. In one embodiment, a "device type indication" field in the capability negotiation request message is used to indicate the type of the device. For example, the following values may be assigned to the "device type indication" field:

'0000': non-machine-type device (e.g., a mobile phone)
'0001': machine type device, type 1, with delay requirement less than T1
'0010': machine type device, type 2, with delay requirement less than T2

Other values: reserved.

After receiving or determining the machine device type, the base station or the network may indicate a rule associated with the scheduling for the timing of the network entry. The rule may be indicated, e.g., in a capability negotiation response message. In one embodiment, a "network entry scheduling rule indication" field in the capability negotiation response message is used to indicate the back-off window length. For example, the following values may be assigned to the "network entry scheduling rule indication" field:

> '0000': initial back-off window length L0
> '0001': initial back-off window length L1
> '0010': initial back-off window length L2

Other values: reserved.

In one embodiment, the base station indicates the scheduling rule as follows. If the received machine device type indication is '0000', then the base station indicates '0000' as the scheduling rule. If the received machine device type indication is '0001', then the base station indicates '0001' as the scheduling rule. If the received machine device type indication is '0010', then the base station indicates '0010' as the scheduling rule. Other device type values may map to other scheduling rule values in a similar way.

In some embodiments, the scheduling can be associated with a maximum back-off window length. Different devices may have a different maximum back-off window length. For example, a device with a stringent requirement on delay may be assigned a smaller maximum back-off window length, while a device with a looser requirement on delay may be assigned a larger maximum back-off window length.

The machine device remembers the rule assigned to the device after the rule is received. The machine device then applies the rule every time the machine device performs network entry. Such rules may be pre-provisioned as well. When the rule is pre-provisioned, the machine device can use the assigned timing for network entry, even without a capability negotiation procedure.

A pre-provisioned rule is a mapping or a function that both the base station (or network) and the machine device know ahead of time, e.g., the rule is pre-defined. For example, in one embodiment, the mapping function is

$$IWL = DT$$

where IWL is the index of initial back-off window lengths, and DT is the index of the device type indications.

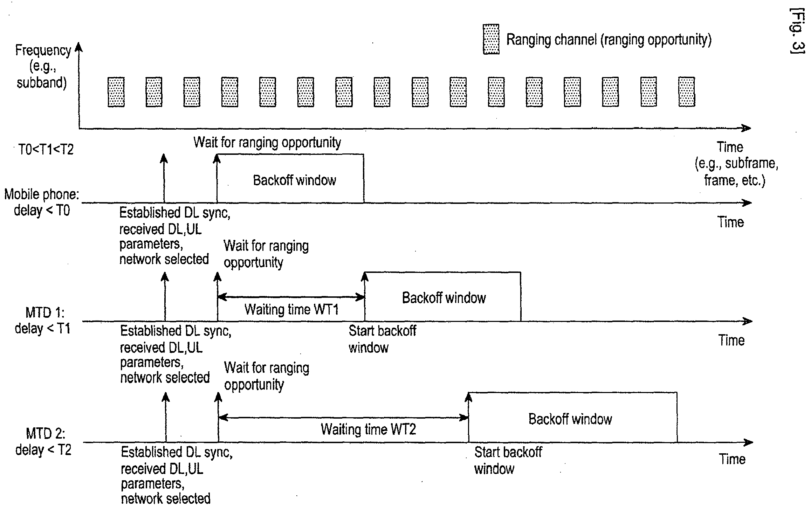

FIGURE 3 illustrates an example of scheduling network entry using different waiting times for different devices with different urgency requirements, according to one embodiment of this disclosure. In FIGURE 3, a mobile phone and two machine devices MTD 1 and MTD 2 all attempt network entry. The mobile phone has the most stringent delay requirement for the network access procedure-the delay must be less than a time period T0, where T0 < T1 < T2. Thus, the mobile phone is not assigned a wait period to start the back-off window. MTD 1 has a medium delay requirement for network access-- the delay must be less than T1. Accordingly, MTD 1 is assigned a small time interval WT1 to wait before starting the back-off window. MTD 2 has the least rigorous delay requirement for network access--the delay must be less than T2. Thus, MTD 2 is assigned a a large time interval WT2 to wait before starting the back-off window.

In certain embodiments, the machine device may indicate its type to the network. For example, the machine device may indicate its type to the network in a "device type indication" field in a capability negotiation request message, such as described above in the example in FIGURE 2.

After receiving or determining the machine device type, the BS or the network may indicate a rule associated with the scheduling for the timing of the network entry. The rule may be indicated, e.g., in a capability negation response message. In one embodiment, a "network entry scheduling rule indication" field is used to indicate the waiting time before the back-off window starts. For example, the following values may be assigned to the "network entry scheduling rule indication" field:

> '0000': Waiting time 0
> '0001': Waiting time WT1
> '0010': Waiting time WT2

Other values: reserved.

In one embodiment, the base station indicates the scheduling rule as follows. If the received machine device type indication is '0000', then the base station indicates '0000' as the scheduling rule. If the received machine device type indication is '0001', then the base station indicates '0001' as the scheduling rule. If the received machine device type indication is '0010', then the base station indicates '0010' as the scheduling rule. Other device type values may map to other scheduling rule values in a similar way.

In another embodiment of this disclosure, if many machine devices (e.g., utility meters) may communicate with the network at the same time (due to reasons such as a power outage, recovery of a power outage, receiving a group based paging, and so forth), to avoid possible congestion on ranging in network entry, the machine devices may be scheduled to start the ranging process at different times.

For example, in a geographic area, a power outage (blackout) may occur, and all the meters in the affected attempt to report the outage to the network right after the outage. Likewise, when the power is restored, all the meters attempt to get back to the network. In these situations, the network may be congested by a large number of devices trying to communicate with the network at the same time. In this embodiment, the power outage is used as one example of the reasons that the devices may attempt network entry at the same time.

Upon an occurrence of an event that may cause many devices to attempt network entry at the same time (e.g., power outage, recovery of power outage, etc.), when such an event is detected, the device can apply one or more rules to try to avoid congestion. The rules may include using a different timing on the back-off window, a different size of the back-off window, a different waiting time to start the process of ranging, and the like.

Similar to the previous embodiments, the base station, system, or network may maintain and manage the scheduling rules and configurations, device type indications, scheduling rule indications, delivery methods of such indications, delivery methods of scheduling rules, and so forth. The rules and associated information may be communicated from the network to the associated machine devices. In embodiments where the waiting time is long such that the scheduling information may be changed, then the machine devices may obtain updated scheduling information, e.g., via periodically monitoring the broadcast channel, monitoring the change count of the broadcast channel, monitoring the preamble or sync channel, and so forth.

The base station or the network may indicate a rule associated with the scheduling for the timing of the network entry. The rule may be indicated, e.g., in a message such as a capability negotiation response message. In one embodiment, a "network entry scheduling rule indication for reasons such as power outage" field in the capability negotiation response message is used to indicate the scheduling. The field may have the following values:

'0000': Waiting time to start back-off window: 0
'0001': Waiting time to start back-off window: WT1
'0010': Waiting time to start back-off window: WT2
'0011': Waiting time to start back-off window: Infinity (i.e., no need to report power outage)

Other values: reserved.

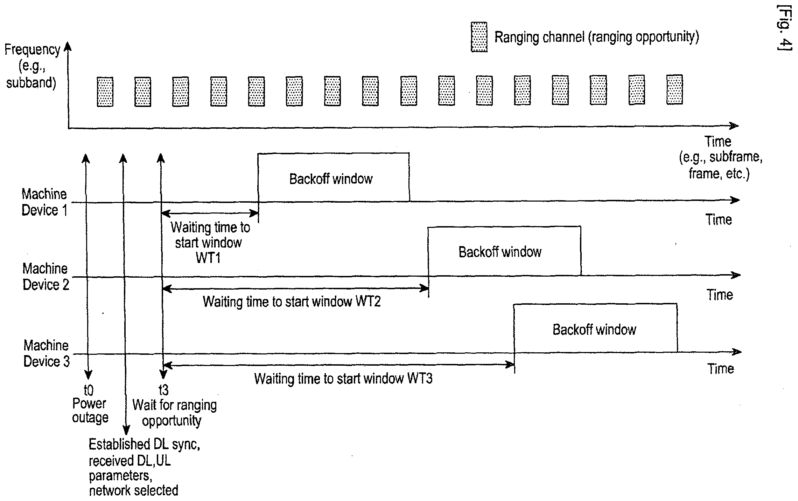

FIGURE 4 illustrates an example of scheduling network entry using different wait times for different devices, according to this embodiment. After a power outage (indicated at time t0), among the devices that report the outage to the network, different devices may wait for different periods of time before the start of the back-off window. As shown in FIGURE 4, machine devices 1, 2, and 3 wait for periods corresponding to waiting times WT1, WT2, and WT3 to start the back-off window, respectively. The start of the waiting period may coincide with the ranging opportunity, indicated at time t3.

In another embodiment of this disclosure, the base station or network may indicate a rule associated with the scheduling for the timing of the network entry. The rule may be indicated, e.g., in a message such as a capability negotiation response message. In one embodiment, a "network entry scheduling rule indication for reasons such as power outage" field in the capability negotiation response message is used to indicate the waiting time. For example, the following values may be assigned to the "network entry scheduling rule indication, for reasons such as power outage" field:

'0000': Waiting time to start network entry procedure: 0
'0001': Waiting time to start network entry procedure: WT1
'0010': Waiting time to start network entry procedure: WT2
'0011': Waiting time to start network entry procedure: Infinity (i.e., no need to report power outage)

Other values: reserved.

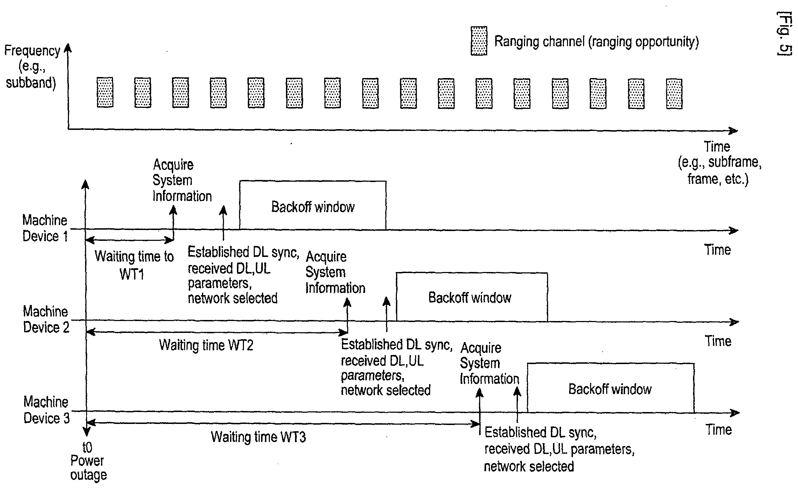

FIGURE 5 illustrates an example of scheduling network entry where each device waits a certain time before starting the network entry procedure, according to this embodiment. After a power outage (indicated at time t0), among the devices that report the outage to the network, different devices may wait for different periods of time before starting the network entry procedure. As shown in FIGURE 5, machine devices 1, 2, and 3 wait for periods corresponding to waiting times WT1, WT2, and WT3 to start the network entry procedure, respectively.

In another embodiment of the current invention, different rules of scheduling may be applied according to the different events that trigger network entry of many devices at the same time. The indication of the scheduling rules due to different events, scenarios and use cases (e.g., different causes, different device capability, different service requirements, etc.) can be combined, jointly coded, and so forth.

For example, the base station or the network may indicate a rule associated with the scheduling for the timing of the network entry. The rule may be indicated, e.g., in a message such as a capability negotiation response message or another downlink message. In one embodiment, a "network entry scheduling rule indication for reasons such as power outage" field in the downlink message is used to indicate the scheduling rule. For example, the following values may be assigned to the "network entry scheduling rule indication for reasons such as power outage" field:

'0000': Waiting time to start back-off window: 0
'0001': Waiting time to start back-off window: WT1
'0010': Waiting time to start back-off window: WT2
'0011': Waiting time to start back-off window: Infinity (i.e., no need to report power outage), for reasons such as power outage
'0100': Waiting time to start network entry procedure: 0
'0101': Waiting time to start network entry procedure:

WT1

'0110': Waiting time to start network entry procedure: WT2

Other values: reserved.

The downlink message may also include a "network entry scheduling rule indication for reasons such as power outage recovery" field with the following possible values:

'0000': Waiting time to start back-off window: 0
'0001': Waiting time to start back-off window: WT1
'0010': Waiting time to start back-off window: WT2

Other values: reserved.

The downlink message may also include a "network entry scheduling rule indication for reasons such as receiving a group based paging" field with the following possible values:

'0000': Waiting time to start back-off window: 0, response needed
'0001': Waiting time to start back-off window: WT1, response needed
'0010': Waiting time to start back-off window: WT2, response needed
'0011': Waiting time to start back-offwindow: Infinity, response NOT needed after receiving group based paging

Other values: reserved.

Similar indications (i.e., additional fields in the downlink message) may be implemented for "waiting time to start the procedure of network entry". These indications can be combined or jointly coded with the other indications. In certain embodiments, the indications are predefined, pre-provisioned, or signaled from the network to the machine device.

In accordance with another embodiment of this disclosure, in the event of a power outage, the base station or the network may select some of the machine devices to report the power outage, and select some of the devices not to report the power outage. The base station or network may make the selection based on the battery capability of the devices.

The machine device may indicate its type to the network, e.g., in a message such as capability negotiation request message. In one embodiment, the machine device may indicate its type in a "device type indication"field in the capability negotiation request message. For example, the following values may be assigned to the "device type indication" field:

'0000': non-machine-type device
'0001': machine type device

Other values: reserved.

The machine device may also indicate its battery configuration in a "device battery indication" field in the capability negotiation request message. The "device battery indication" field may have the following values:

'0000': no backup battery, no battery buffer
'0001': no backup battery, with battery buffer
'0010': backup battery present

Other values: reserved.

Depending on the device type and battery indication from the machine device, the network assigns a network entry schedule to the machine device. For example, the network may assign an immediate network entry without any waiting time (e.g., a code '0000' for a power outage case) if the battery indication indicates the machine device does not have a backup battery but has some battery buffer, if the device is indicated to report a power outage. The network may determine not to request those devices that do not have a backup battery to report a power outage, if there are other devices with backup battery available.

In accordance with another embodiment of this disclosure, in the event of a power outage, the base station or the network may select some of the machine devices to report the power outage, and select some of the devices not to report the power outage. In this embodiment, the base station or network may make the selection based on the location information of the devices.

For example, if the machine devices (e.g., utility meters) are not moving and have a fixed location, the base station or network may sample the geographical area using a small number of utility meters that would report when a power outage occurs. In such an embodiment, a power outage does not trigger a surge in network access because only a few meters would report the outage. The meters selected for the sampling may indicate if a neighborhood, a street, or an entire city has lost power. Location information is useful in determining if there is sufficient geographical coverage of the selected devices so that any outage can be immediately identified. The negotiations between the base station or network and the device indicate whether or not the device is to report an outage.

In addition to location information, there are other metrics that the base station can use to determine if the device should report outage. These other metrics include (but are not limited to) device geometry (link status), device capability (supplemental battery availability), and priority of the device in the network.

In certain embodiments of this disclosure, some system information, such as MSID, CRID, group ID, etc, can be mapped or hashed (via a mapping function) to the parameters or configuration of the scheduling rules. Here, the scheduling parameters may include the waiting time configuration indices, the initial back-offwindow size configuration indices, configuration parameters associated with whether meters report an outage (e.g., setting the waiting time as a very large number or infinity), and the like. The mapping may be predefined and stored by the machine device and the network, or the network may send the mapping to the machine device in one or more downlink messages. In one example, the mapping function is:

$$WT\_i = \mathrm{mod}\,(MSID\_i, N)$$

where WT_i is the waiting time of the i-th device, MSID_i is the MSID of the i-th device, and N is a parameter (e.g., N can be the number of configurations of the waiting time).

In another example, the mapping function is:

$$WT\_i = \mathrm{mod}\,(CRID\_i, N)$$

where WT_i is the waiting time of the i-th device, CRID_i is the CRID of the i-th device, and N is a parameter (e.g., N can be the number of configurations of the waiting time).

In certain embodiments, the mapping function can be used by all of the devices that perform network entry, particularly in situations where the network entry of many devices may happen at approximately the same time. The devices may have the same or similar level of capability, such as the same level of delay/latency requirement, etc. The devices may use the above approaches (e.g., negotiation with the network regarding the assignment of the scheduling rule, based on the device capability), then use a mapping function to provide further staggering or offsetting in the scheduling rule within the devices having the same level of device capability.

In certain embodiments, if a power outage occurs and then the power is restored before a machine device achieves access to report the power outage, then the device may follow a procedure for a power outage recovery.

In an example, a device (e.g., mobile station 1) attempts to access the network early, due to one or more reasons such as the device does not have a backup battery or has a very poor battery. Thus, mobile station 1 may have a more urgent need to report than other devices. The system may require device to obey the rules, and set up the configuration during capability negotiation. For example, a device indicates its capability (e.g., indication of a machine type device access level) using the following values:

    0000: regular MS
    0001: MTD (machine type device) with battery backup
    0010: MTD without a battery backup
    0011: MTD with low urgency level
    0100: MTD with medium urgency level
    0101: MTD with high urgency level.

The set up can be according to the following reason bits:
    00: power outage. The ranging starts the back-off window after waiting WT0 time.
    00: power outage. MS with MTD access level 0001 starts the back-off window after waiting WT0 time.
    01: power outage recovery. MS with MTD access level 0101 starts the back-off window after waiting WT0 time.

Accordingly, the device starts to acquire system information after waiting the designated time after the power outage.

In certain embodiments, some ranging channels may be reserved for the purpose of supporting the ranging incertain situations, such as a power outage. As another example, mobile phones may use one set of ranging channels, while machine type devices (MTD) use a different set of ranging channels. The ranging channels can be of different periodicity/timing for different usage. That is, the periodicity/timing of a ranging channel for a mobile phone may be different from a periodicity/timing of a ranging channel for a MTD. Similarly the ranging code may be partitioned and each set may be allocated according to different usage.

In certain embodiments, paging messagesmay include paging for a group of machine devices. A paging message may carry some information such as system update information to a group of machine devices, and the message may indicate whether response such as ACK/NACK is needed. After receiving paging information if an ACK/NACK is needed, then the offset for starting the back-off window can apply.

In certain embodiments, machine devicescan use different timings for sending a bandwidth request for the resource to send uplink information to the base station, such as a ranging request message, etc. For the bandwidth request, the machine device may also have the random back-off approach if it collides with other machine device's bandwidth request. The principles describedin above embodiments can be applied to the timing of the sending bandwidth request, such as offsetting the starting time of a back-offwindow based on different requirements of the delay or latency, offsetting the start time of sending the bandwidth request, etc.

In certain embodiments, for devices that are in a DCR mode, the uplink message (a utility meter's report) may be included in another message, such as a ranging request message. The network may send downlink messages in the ranging response message.

A machine device in a DCR mode can send a message (e.g., a short message (SMS)) by sending another message (e.g., a ranging request message) with a ranging purpose indication having a predefined value (a specific value assigned to such purpose) in combination with a CRID before the device's context retention timer expires. When the base station receives the message with SMS, the base station sends a response message, such as a ranging response message, as a confirmation of the SMS.

The indication of the SMS in DCR mode may use the same ranging purpose indication for CR timer extension (i.e., the ranging purpose indication value assigned for CR timer extension) combined with a further indication for SMS within the ranging purpose.

For example, in the language of IEEE 802.16, an AMS in DCR mode can send an SMS by sending an AAI-RNG-REQ message with a ranging purpose indication having a value '0b1110' in combination with a CRID before the AMS's context retention timer expires. When the base station receives the AAI-RNG-REQ message with SMS, the base station sends an AAI-RNG-RSP message as a confirmation of the SMS.

When an AAI-RNG-RSP message includes a downlink (DL) SMS, an AAI-MSG-ACK message is sent as a confirmation of the DL SMS. The base station grants a CDMA Allocation A-MAP IE for the AAI-MSG-ACK in unsolicited manner by an ACK timer, where MCRC is masked with the same RA-ID as in CDMA Allocation A-MAP IE for the AAI-RNG-REQ message. When the AMS receives the AAI-RNG-RSP with the DL SMS, the AMS starts the ACK timer and waits the CDMA Allocation A-MAP IE to send the AAI-MSG-ACK message.

The indication of the SMS in DCR mode may use the same indication for CR timer extension, i.e., the ranging purpose indication value '0b0100', combined with a further indication for SMS. The response AAI-RNG-RSP would be changed accordingly.

All the embodiments described in this disclosure can be used in other scenarios. For example, the method of offsetting devices to wait for different periods of time may be applied after an initial attempt of regular ranging (no additional waiting time). Then, if a collision occurs, the proposed approaches described in this disclosure may be used.

Those skilled in the art will recognize that the full construction and operation of a machine device configured for M2M communication is not described herein or depicted in the drawings. Instead, for simplicity and clarity, only so much of the construction and operation of a machine device as is unique to the present invention or necessary for an understanding of the present invention is depicted and described. It will be understood that the functions of the machine device described herein may be executed by one or more processors, controllers, memories, interfaces, and circuitries contained in, on, or associated with the machine device.

**Claims**

1. A method to support machine-to-machine communications, the method comprising:

   receiving, by a machine device, system information from a base station;

   transmitting, by the machine device, a capability negotiation request message including information indicating a type of the machine device to the base station;

   receiving, by the machine device, a capability negotiation response message including information on parameters for a ranging back-off window (201;202;203) corresponding to the type of the machine device from the base station;

   identifying, by the machine device, a ranging channel during the ranging back-off window (201;202;203) based on the parameters;

   performing, by the machine device, ranging based on the identified ranging channel; and

   communicating, by the machine device, with the base station,

   wherein the ranging channel is identified based on a ranging priority of the machine device,

   wherein the type of the machine device is one of a machine type device with a delay less than a first value, and a machine type device with a delay less than a second value being greater than the first value.

2. A method to support machine-to-machine communications, the method comprising:

   transmitting, by a base station, system information to a machine device;

   receiving, by the base station, a capability negotiation request message including information indicating a type of the machine device from the machine device;

   transmitting, by the base station, a capability negotiation response message including information on parameters for a ranging back-off window (201;202;203) corresponding to the type of the machine device to the machine device;

   identifying, by the base station, a ranging channel during the ranging back-off window (201;202;203) based on the parameters;

   receiving, by the base station, a signal from the machine device on the identified ranging channel; and

   communicating, by the base station, with the machine device,

   wherein the ranging channel is identified based on a ranging priority of the machine device,

   wherein the type of the machine device is one of a machine type device with a delay less than a first value, and a machine type device with a delay less than a second value being greater than the first value.

3. The method of claim 1 or claim 2, wherein the parameters comprises a length of the ranging back-off window (201; 202; 203) and the length of the ranging back-off window (201; 202; 203) is determined based on the ranging priority of the machine device by the base station.

4. The method of claim 1 or claim 2, wherein the parameters comprises a start time of the ranging back-off window and the start time of the ranging back-off window (201;202;203) is determined based on the ranging priority of the machine device by the base station.

5. The method of Claim 4, wherein the start time of the ranging back-off window (201;202;203) is assigned to the machine device in the capability negotiation response message from the base station.

6. The method of claim 4, wherein the parameters comprises a waiting time before the start time of the ranging back-off window (201;202;203) and the waiting time is determined based on the ranging priority of the machine device by the base station.

7. The method of claim 1 or claim 2, wherein the parameters comprises a waiting time before a start of a network entry procedure and the waiting time is determined based on the ranging priority of the machine device by the base station.

8. The method of claim 1 or claim 2, wherein the machine device has a lower ranging priority than a mobile phone.

9. The method of claim 3, wherein during a power outage, the length of the back-off window is set based on a power constraint of a backup battery by the machine device.

10. A machine device configured to support machine-to-machine communications, the machine device comprising:

a transceiver configured to transmit and receive signal by controlling a processor;
the processor configured to control to:

receive system information from a base station;
transmit a capability negotiation request message including information indicating a type of the machine device to the base station;
receive a capability negotiation response message including information on parameters for a ranging back-off window (201;202;203) corresponding to the type of the machine device from the base station;
identify a ranging channel during the ranging back-off window (201;202;203) based on the parameters;

perform ranging based on the identified ranging channel; and
communicate with the base station
wherein the ranging channel is identified based on a ranging priority of the machine device,
wherein the type of the machine device is one of a machine type device with a delay less than a first value, and a machine type device with a delay less than a second value being greater than the first value.

11. The machine device of claim 10 wherein the machine device is configured to perform one of method of claim 3 to claim 9, when dependent on claim 1.

12. A base station configured to support machine-to-machine communications, the base station comprising:

a transceiver configured to transmit and receive signal by controlling a processor;
the processor configured to control to:

transmit system information to a machine device;
receive a capability negotiation request message including information indicating a type of the machine device from the machine device;
transmit a capability negotiation response message including information on parameters for a ranging back-off window (201;202;203) corresponding to the type of the machine device to the machine device;
identify a ranging channel during the ranging back-off window (201;202;203) based on the parameters;
receive a signal from the machine device on the identified ranging channel; and
communicate with the machine device,
wherein the ranging channel is identified based on a ranging priority of the machine device,
wherein the type of the machine device is one of a machine type device with a delay less than a first value, and a machine type device with a delay less than a second value being greater than the first value.

13. The base station of claim 12, wherein the base station is configured to perform one of method of claim 3 to claim 9, when dependent on claim 2.

**Patentansprüche**

1. Verfahren zur Unterstützung von Maschine-zu-Maschine-Kommunikation, wobei das Verfahren Fol-

gendes umfasst:

Empfangen von Systeminformationen von einer Basisstation durch eine Maschinenvorrichtung; Übertragen einer Fähigkeitsverhandlungs-Anforderungsnachricht einschließlich Informationen, die einen Typ der Maschinenvorrichtung angeben, an die Basisstation durch die Maschinenvorrichtung; Empfangen einer Fähigkeitsverhandlungs-Antwortmeldung einschließlich Informationen über Parameter für ein Abstandsbestimmungs-Backoff-Fenster (201;202;203) entsprechend dem Typ der Maschinenvorrichtung durch die Maschinenvorrichtung von der Basisstation; Identifizieren eines Abstandsbestimmungskanals während des Abstandsbestimmungs-Backoff-Fensters (201;202;203) durch die Maschinenvorrichtung basierend auf den Parametern; Ausführen einer Abstandsbestimmung durch die Maschinenvorrichtung, basierend auf dem identifizierten Abstandsbestimmungskanal; und Kommunizieren mit der Basisstation durch die Maschinenvorrichtung, wobei der Abstandbestimmungskanal basierend auf einer Abstandstimmungs-Priorität der Maschinenvorrichtung identifiziert wird, wobei der Typ der Maschinenvorrichtung eine Maschinentypvorrichtung mit einer Verzögerung von weniger als einem ersten Wert, und eine Maschinentypvorrichtung mit einer Verzögerung von weniger als einem zweiten Wert ist, der größer als der erste Wert ist.

2. Verfahren zur Unterstützung von Maschine-zu-Maschine-Kommunikation, wobei das Verfahren Folgendes umfasst:

Übertragen von Systeminformationen an eine Maschinenvorrichtung durch eine Basisstation; Empfangen durch die Basisstation, einer Fähigkeitsverhandlungs-Anforderungsnachricht einschließlich Informationen, die einen Typ der Maschinenvorrichtung angeben, von der Maschinenvorrichtung; Übertragen einer Fähigkeitsverhandlungs-Antwortmeldung einschließlich Informationen über Parameter für ein Abstandsbestimmungs-Backoff-Fenster (201;202;203) entsprechend dem Typ der Maschinenvorrichtung durch die Basisstation an die Maschinenvorrichtung; Identifizieren eines Abstandbestimmungskanals während des Abstandbestimmungs-Backoff-Fensters (201;202;203) basierend auf den Parametern durch die Basisstation; Empfangen eines Signals von der Maschinenvorrichtung auf dem identifizierten Bereichskanal durch die Basisstation; und Kommunizieren mit der Maschinenvorrichtung durch die Basisstation, wobei der Abstandsbestimmungskanal basierend auf einer Abstandsbestimmungspriorität der Maschinenvorrichtung identifiziert wird, wobei der Typ der Maschinenvorrichtung eine Maschinentypvorrichtung mit einer Verzögerung von weniger als einem ersten Wert oder eine Maschinentypvorrichtung mit einer Verzögerung von weniger als einem zweiten Wert ist, der größer als der erste Wert ist.

3. Verfahren nach Anspruch 1 oder Anspruch 2, wobei die Parameter eine Länge des Abstandsbestimmungs-Backoff-Fensters (201; 202; 203) umfassen und die Länge des Abstandsbestimmungs-Backoff-Fensters (201; 202; 203) basierend auf der Abstandsbestimmungs-Priorität der Maschinenvorrichtung durch die Basisstation bestimmt wird.

4. Verfahren nach Anspruch 1 oder Anspruch 2, wobei die Parameter eine Startzeit des Abstandsbestimmungs-Backoff-Fensters umfassen und die Startzeit des Abstandsbestimmungs-Backoff-Fensters (201;202;203) basierend auf der Abstandstimmungs-Priorität der Maschinenvorrichtung durch die Basisstation bestimmt wird.

5. Verfahren nach Anspruch 4, wobei die Startzeit des Abstandsbestimmungs-Backoff-Fensters (201;202;203) der Maschinenvorrichtung in der Fähigkeitsverhandlungs-Antwortnachricht von der Basisstation zugewiesen wird.

6. Verfahren nach Anspruch 4, wobei die Parameter Wartezeiten vor der Startzeit des Abstandsbestimmungs-Backoff-Fensters (201,202,203) umfassen und die Wartezeiten basierend auf der Abstandstimmungs-Priorität der Maschinenvorrichtung durch die Basisstation bestimmt werden.

7. Verfahren nach Anspruch 1 oder Anspruch 2, wobei die Parameter Wartezeiten vor einem Start eines Netzeingabeverfahrens umfassen und die Wartezeiten basierend auf der Abstandstimmungs-Priorität der Maschinenvorrichtung durch die Basisstation bestimmt werden.

8. Verfahren nach Anspruch 1 oder Anspruch 2, wobei die Maschinenvorrichtung eine geringere Abstandstimmungs-Priorität als ein Mobiltelefon hat.

9. Verfahren nach Anspruch 3, wobei während eines Leistungsausfalls, die Länge des Backoffs-Fensters basierend auf einer Leistungsbeschränkung einer Backoff-Batterie durch die Maschinenvorrichtung eingestellt ist.

**10.** Maschinenvorrichtung, die konfiguriert ist, um Maschine-zu-Maschine-Kommunikation zu unterstützen, wobei die Maschinenvorrichtung Folgendes umfasst:

einen Transceiver, der konfiguriert ist, um Signale durch Steuerung eines Prozessors zu übertragen und zu empfangen;
den Prozessor, der konfiguriert ist, um Folgendes zu steuern:

Empfangen von Systeminformationen von einer Basisstation;
Übertragen einer Fähigkeitsverhandlungs-Anforderungsnachricht einschließlich Informationen, die einen Typ der Maschinenvorrichtung angeben, an die Basisstation;
Empfangen einer Fähigkeitsverhandlungs-Antwortmeldung einschließlich Informationen über Parameter für ein Abstandsbestimmungs-Backoff-Fenster (201;202;203) entsprechend dem Typ der Maschinenvorrichtung von der Basisstation;
Identifizieren eines Abstandbestimmungs-Kanals während des Abstandsbestimmungs-Backoff-Fensters (201;202;203) basierend auf den Parametern;
Ausführen einer Abstandsbestimmung basierend auf dem identifizierten Abstandsbestimmungskanal; und
Kommunizieren mit der Basisstation
wobei der Abstandbestimmungskanal basierend auf einer Abstandstimmungs-Priorität der Maschinenvorrichtung identifiziert wird,
wobei der Typ der Maschinenvorrichtung eine Maschinentypvorrichtung mit einer Verzögerung von weniger als einem ersten Wert, und eine Maschinentypvorrichtung mit einer Verzögerung von weniger als einem zweiten Wert ist, der größer als der erste Wert ist.

**11.** Maschinenvorrichtung nach Anspruch 10, wobei die Maschinenvorrichtung konfiguriert ist, um eines der Verfahren nach Anspruch 3 bis Anspruch 9 auszuführen, wenn diese von Anspruch 1 abhängig sind.

**12.** Basisstation, die konfiguriert ist, um Maschine-zu-Maschine-Kommunikation zu unterstützen, wobei die Basisstation Folgendes umfasst:

einen Transceiver, der konfiguriert ist, um Signale durch Steuerung eines Prozessors zu übertragen und zu empfangen;
den Prozessor, der konfiguriert ist, um Folgendes zu steuern:

Übertragen von Systeminformationen an eine Maschinenvorrichtung;
Empfangen einer Fähigkeitsverhandlungs-Anforderungsnachricht einschließlich Informationen, die einen Typ der Maschinenvorrichtung angeben, von der Maschinenvorrichtung;
Übertragen einer Fähigkeitsverhandlungs-Antwortmeldung einschließlich Informationen über Parameter für ein Abstandsbestimmungs-Backoff-Fenster (201;202;203) entsprechend dem Typ der Maschinenvorrichtung an die Maschinenvorrichtung;
Identifizieren eines Abstandbestimmungskanals während des Abstandsbestimmungs-Backoff-Fensters (201;202;203) basierend auf den Parametern;
Empfangen eines Signals von der Maschinenvorrichtung auf dem identifizierten Abstandsbestimmungskanal; und
Kommunizieren mit der Maschinenvorrichtung,
wobei der Abstandsbestimmungskanal basierend auf einer Abstandsbestimmungs-Priorität der Maschinenvorrichtung identifiziert wird,
wobei die Maschinenvorrichtung eine Maschinentypvorrichtung mit einer Verzögerung von weniger als einem ersten Wert ist oder eine Maschinentypvorrichtung mit einer Verzögerung von weniger als einem zweiten Wert, der größer als der erste Wert ist.

**13.** Basisstation nach Anspruch 12, wobei die Basisstation konfiguriert ist, um eines der Verfahren nach Anspruch 3 bis Anspruch 9 auszuführen, wenn diese von Anspruch 2 abhängig sind.

**Revendications**

**1.** Procédé pour la prise en charge de communications de machine à machine, le procédé comprenant :

recevoir, par un dispositif de machine, des informations de système à partir d'une station de base ;
transmettre, par le dispositif de machine, un message de demande de négociation de capacité incluant des informations qui indiquent un type du dispositif de machine à la station de base ;
recevoir, par le dispositif de machine, un message de réponse de négociation de capacité incluant des informations sur des paramètres pour une fenêtre d'attente de télémétrie (201;202;203) correspondant au type du dispositif de machine de la station de base ;
identifier, par le dispositif de machine, un canal de télémétrie pendant la fenêtre d'attente de télémétrie (201;202;203) sur la base des paramètres ;
effectuer, par le dispositif de machine, une télémétrie sur la base du canal de télémétrie identifié ; et
communiquer, par le dispositif de machine, avec la station de base,
où le canal de télémétrie est identifié sur la base d'une priorité de télémétrie du dispositif de machine,
où le type du dispositif de machine est l'un parmi un dispositif de type machine avec un retard inférieur à une première valeur, et un dispositif de type machine avec un retard inférieur à une deuxième valeur étant supérieure à la première valeur.

2. Procédé pour la prise en charge de communications de machine à machine, le procédé comprenant :

transmettre, par une station de base, des informations de système à un dispositif de machine ;
recevoir, par la station de base, un message de demande de négociation de capacité incluant des informations qui indiquent un type du dispositif de machine à partir du dispositif de machine ;
transmettre, par la station de base, un message de réponse de négociation de capacité incluant des informations sur des paramètres pour une fenêtre d'attente de télémétrie (201;202;203) correspondant au type du dispositif de machine au dispositif de machine ;
identifier, par la station de base, un canal de télémétrie pendant la fenêtre d'attente de télémétrie (201;202;203) sur la base des paramètres ;
recevoir, par la station de base, un signal en provenance du dispositif de machine sur le canal de télémétrie identifié ; et
communiquer, par la station de base, avec le dispositif de machine,
où le canal de télémétrie est identifié sur la base d'une priorité de télémétrie du dispositif de machine,
où le type du dispositif de machine est l'un parmi un dispositif de type machine avec un retard inférieur à une première valeur et un dispositif de type machine avec un retard inférieur à une deuxième valeur étant supérieure à la première valeur.

3. Procédé selon la revendication 1 ou la revendication 2, où les paramètres comprennent une longueur de la fenêtre d'attente de télémétrie (201; 202; 203) et la longueur de la fenêtre d'attente de télémétrie (201; 202; 203) est déterminée sur la base de la priorité de télémétrie du dispositif de machine par la station de base.

4. Procédé selon la revendication 1 ou la revendication 2, où les paramètres comprennent un temps de début de la fenêtre d'attente de télémétrie et le temps de début de la fenêtre d'attente de télémétrie (201;202;203) est déterminé sur la base de la priorité de télémétrie du dispositif de machine par la station de base.

5. Procédé selon la revendication 4, où le temps de début de la fenêtre d'attente de télémétrie (201;202;203) est assigné au dispositif de machine dans le message de réponse de négociation de capacité de la station de base.

6. Procédé selon la revendication 4, où les paramètres comprennent un délai d'attente avant le temps de début de la fenêtre d'attente de télémétrie (201;202;203) et le délai d'attente est déterminé sur la base de la priorité de télémétrie du dispositif de machine par la station de base.

7. Procédé selon la revendication 1 ou la revendication 2, où les paramètres comprennent un délai d'attente avant un début d'une procédure d'entrée de réseau et le délai d'attente est déterminé sur la base de la priorité de télémétrie du dispositif de machine par la station de base.

8. Procédé selon la revendication 1 ou la revendication 2, où le dispositif de machine a une priorité de télémétrie inférieure à celle d'un téléphone mobile.

9. Procédé selon la revendication 3, où, pendant une panne de système d'alimentation, la longueur de la fenêtre d'attente est réglée sur la base d'une contrainte de puissance d'une batterie de secours par le dispositif de machine.

10. Dispositif de machine configuré pour la prise en charge de communications de machine à machine, le dispositif de machine comprenant :

un émetteur-récepteur configuré pour transmettre et recevoir un signal par commande d'un processeur ;
le processeur configuré pour commander de :

recevoir des informations de système à partir d'une station de base ;
transmettre un message de demande de négociation de capacité incluant des informations qui indiquent un type du dispositif de machine à la station de base ;

recevoir un message de réponse de négociation de capacité incluant des informations sur des paramètres pour une fenêtre d'attente de télémétrie (201;202;203) correspondant au type du dispositif de machine de la station de base ;
identifier un canal de télémétrie pendant la fenêtre d'attente de télémétrie (201;202;203) sur la base des paramètres ;
effectuer une télémétrie sur la base du canal de télémétrie identifié ; et
communiquer avec la station de base
où le canal de télémétrie est identifié sur la base d'une priorité de télémétrie du dispositif de machine,
où le type du dispositif de machine est l'un parmi un dispositif de type machine avec un retard inférieur à une première valeur et un dispositif de type machine avec un retard inférieur à une deuxième valeur étant supérieure à la première valeur.

11. Dispositif de machine selon la revendication 10, où le dispositif de machine est configuré pour mettre en œuvre l'un des procédés de la revendication 3 à la revendication 9, lorsqu'elles sont dépendantes de la revendication 1.

12. Station de base configurée pour la prise en charge de communications de machine à machine, la station de base comprenant :

un émetteur-récepteur configuré pour transmettre et recevoir un signal par commande d'un processeur ;
le processeur configuré pour commander de :

transmettre des informations de système à un dispositif de machine ;
recevoir un message de demande de négociation de capacité incluant des informations qui indiquent un type du dispositif de machine à partir du dispositif de machine ;
transmettre un message de réponse de négociation de capacité incluant des informations sur des paramètres pour une fenêtre d'attente de télémétrie (201;202;203) correspondant au type du dispositif de machine au dispositif de machine ;
identifier un canal de télémétrie pendant la fenêtre d'attente de télémétrie (201;202;203) sur la base des paramètres ;
recevoir un signal en provenance du dispositif de machine sur le canal de télémétrie identifié ; et
communiquer avec le dispositif de machine,
où le canal de télémétrie est identifié sur la base d'une priorité de télémétrie du dispositif de machine,
où le type du dispositif de machine est l'un parmi un dispositif de type machine avec un retard inférieur à une première valeur, et un dispositif de type machine avec un retard inférieur à une deuxième valeur étant supérieure à la première valeur.

13. Station de base selon la revendication 12, où la station de base est configurée pour mettre en œuvre l'un des procédés de la revendication 3 à la revendication 9, lorsqu'elles sont dépendantes de la revendication 2.

[Fig. 1]

[Fig. 2]

EP 2 661 825 B1

Frequency
(e.g.,
subband)

Ranging channel (ranging opportunity)

T0<T1<T2

Time
(e.g., subframe,
frame, etc.)

Mobile phone:
delay < T0

Backoff window ~201

Established DL sync,    Wait for ranging
received DL,UL          opportunity
parameters,
network selected

Time

MTD 1:
delay < T1

Backoff window ~202

Established DL sync,    Wait for ranging
received DL,UL          opportunity
parameters,
network selected

Time

MTD 2:
delay < T2

Backoff window ~203

Established DL sync,    Wait for ranging
received DL,UL          opportunity
parameters,
network selected

Time

[Fig. 3]

Ranging channel (ranging opportunity)

Frequency
(e.g.,
subband)

Time
(e.g., subframe,
frame, etc.)

T0<T1<T2

Wait for ranging opportunity

Backoff window

Mobile phone:
delay < T0

Established DL sync,
received DL,UL
parameters,
network selected

Wait for ranging
opportunity

Time

Backoff window

Waiting time WT1

MTD 1:
delay < T1

Established DL sync,
received DL,UL
parameters,
network selected

Wait for ranging
opportunity

Start backoff
window

Time

Backoff window

Waiting time WT2

MTD 2:
delay < T2

Established DL sync,
received DL,UL
parameters,
network selected

Start backoff
window

Time

EP 2 661 825 B1

18

[Fig. 4]

EP 2 661 825 B1

19

EP 2 661 825 B1

[Fig. 5]

Ranging channel (ranging opportunity)

Frequency (e.g., subband)

Time (e.g., subframe, frame, etc.)

Machine Device 1

Acquire System Information

Backoff window

Waiting time to WT1

Established DL sync, received DL,UL parameters, network selected

Time

Machine Device 2

Acquire System Information

Backoff window

Waiting time WT2

Established DL sync, received DL,UL parameters, network selected

Time

Machine Device 3

Acquire System Information

Backoff window

Waiting time WT3

Established DL sync, received DL,UL parameters, network selected

t0 Power outage

Time

## REFERENCES CITED IN THE DESCRIPTION

**Patent documents cited in the description**

- EP 1623518 A1

**Non-patent literature cited in the description**

- Part 16 Air Interface for Broadband Wireless Access Systems, Advanced Air Interface. *REF1 IEEE P802.16m/D8,* August 2010